Europäisches Patentamt

(19) European Patent Office

Office européen des brevets

(11) EP 0 735 521 A2

## (12) EUROPEAN PATENT APPLICATION

(43) Date of publication:
02.10.1996 Bulletin 1996/40

(51) Int. Cl.⁶: **G10L 7/08**, G10L 9/06

(21) Application number: 96105137.2

(22) Date of filing: 29.03.1996

(84) Designated Contracting States:
**DE FR GB IT NL**

(30) Priority: **31.03.1995 JP 112265/95**

(71) Applicant: **MATSUSHITA ELECTRIC INDUSTRIAL CO., LTD.**
**Kadoma-shi, Osaka 571 (JP)**

(72) Inventors:
• **Kayashima, Kazuhiro**
  **Hirakata-shi, Osaka 573 (JP)**
• **Matsukawa, Yoshihiko**
  **Ikoma-shi, Nara 630-02 (JP)**
• **Matsui, Kenji**
  **Hirakata-shi, Osaka 630-01 (JP)**
• **Maekawa, Hidetsugu**
  **Ikoma-shi, Nara 630-02 (JP)**

(74) Representative: **Grünecker, Kinkeldey, Stockmair & Schwanhäusser Anwaltssozietät Maximilianstrasse 58 80538 München (DE)**

(54) **Voice recognition device, reaction device, reaction selection device, and reaction toy using them**

(57) A reaction device has anti-gravity apparatus inflated with helium gas , and thread driving apparatus for leading out plural threads, and the thread and a part of the anti-gravity apparatus are connected, and mechanical reactions of the anti-gravity apparatus such as deformation, moving and motion are effected by the thread driving apparatus .

Fig. 1

EP 0 735 521 A2

**Description**

**BACKGROUND OF THE INVENTION**

1.Field of the Invention

The present invention relates to a voice reaction device and so on.

2.Related art of the Invention

Conventionally, a balloon inflated with helium gas comprised propeller and motor, its driving device, and a wireless transmitter, and the balloon was moved back and forth, right and left, and up and down by manipulating the stick of a local remote controller provided with a wireless transmitter by an operator.

However, due to manipulation by the stick of the remote controller, the balloon was handled as a non-life, and the characteristic warmth of the balloon was sacrificed.

**SUMMARY OF THE INVENTION**

The problem is solved by employing the following means. The constitution comprises a voice selection device for selecting and outputting a certain voice by a random number from plural voices in response to one input, a direction detection device having plural microphones for determining the direction of the microphone of which input sound energy is maximum out of these microphone as detected direction, a direction selection device having an azimuth gauge for determining the next moving direction according to the direction indicated by the azimuth gauge, and a voice recognition device.

The invention also relates to a voice recognition device comprising a cyclic memory for cyclically storing sound included uttered voice for a specific time, a voice end point detection device for detecting the end point of the sound, a voice detection device for cutting out the uttered voice portion up to the end point from the cyclic memory, a feature amount extraction device for extracting a feature amount such as zero crossing number of voice, and a voice time detection device for measuring the voice utterance time in the voice uttered portion, wherein the feature amount of the voice desired to be registered and the voice utterance time are preliminarily stored as dictionary, the voice feature amount desired to be recognized is determined by using the feature amount extraction device, the voice utterance time is determined by using the voice time detection device, the distance of the voice feature amount and voice utterance time in the dictionary is determined, and the closest voice in the dictionary is obtained as the result of recognition.

The invention further relates to a reaction device comprising anti-gravity means inflated with helium gas or the like, and thread driving means for pulling out one or plural threads, wherein the thread and part of the anti-gravity means are connected, and mechanical reactions of the anti-gravity means such as deformation, move, and operation are effected by the thread driving means.

The operation of the present invention is described hereafter.

The voice is recognized by the voice recognition device, and is outputted by using a random number out of plural voices prepared for each result of recognition by a voice selection device. Depending on the result of recognition, moreover, a power device is driven to move according to the voice instruction. Or, using the result of recognition, the next moving direction is determined by a direction selection device, thereby moving in the determined direction by using the power device. On other hand, the voice uttered direction is detected by a direction detection device, and the next moving direction is determined by a direction selection device according to the direction, and it is designed to move in the determined direction by the power device. Alternatively, by feeding the direction detected by the direction detection device into the power device, it is intended to move in the detected direction.

BRIEF DESCRIPTION OF THE DRAWINGS

Fig. 1 is a structural diagram of voice selection device.
Fig. 2 is an input and output state diagram in the voice selection device.
Fig. 3 is a structural diagram of voice selection device.
Fig. 4 is a structural diagram of direction detection device.
Fig. 5 is an explanatory diagram of voice waveform and frame.
Fig. 6 is a structural diagram of direction selection device in which offset is an input.
Fig. 7 is a structural diagram of direction selection device in which absolute value is an input.
Fig. 8 is an explanatory diagram of voice waveform, energy, and cyclic memory.
Fig. 9 is an explanatory diagram of voice end point detecting method.
Fig. 10 is an explanatory diagram of voice detecting method.

Fig. 11 is a structural diagram of voice recognition device.

Fig. 12 is a structural diagram of voice reaction device comprising voice recognition device and voice selection device.

Fig. 13 is a structural diagram of voice reaction device comprising direction detection device and operation device.

Fig. 14 is a structural diagram of voice reaction device comprising voice recognition device, direction selection device and operation device.

Fig. 15 is a structural diagram of voice reaction device comprising direction detection device, direction selection device and operation device.

Fig. 16 is a structural diagram of voice reaction device comprising voice recognition device and operation device.

Fig. 17 is a structural diagram of voice reaction device which can be operated by remote control.

Fig. 18 is an explanatory diagram of a toy using a voice reaction device.

Fig.19 is a flowchart showing a voice recognition device of the invention.

Fig. 20 is a drawing showing the length of time of word.

Fig. 21 is a diagram of a response toy showing an example of anti-gravity device of the invention.

Fig. 22 is a functional structural diagram of response toy showing an example of anti-gravity device of the invention.

Fig. 23 is a functional structural diagram of response toy having a contact detecting function of anti-gravity device of the invention.

Fig. 24 is an electric circuit diagram of contact detecting function of response toy showing an example of anti-gravity device of the invention.

Fig.25 is a diagram of a response toy of a cat showing an example of anti-gravity device of the invention.

Fig. 26 is an improved functional drawing of a response toy showing an example of anti-gravity device of the invention.

Fig. 27 is a drawing of other example of response toy showing an example of anti-gravity device of the invention.

## PREFERRED EMBODIMETNTS

Referring now to the drawings, embodiments of the invention are described below. First, basic devices such as voice selection device, direction detection device, and direction selection device are described, and devices about voice recognition such as voice end point detection device, voice detection device, feature amount extraction deice, and voice recognition device are described, and finally the devices by the combination thereof are described.

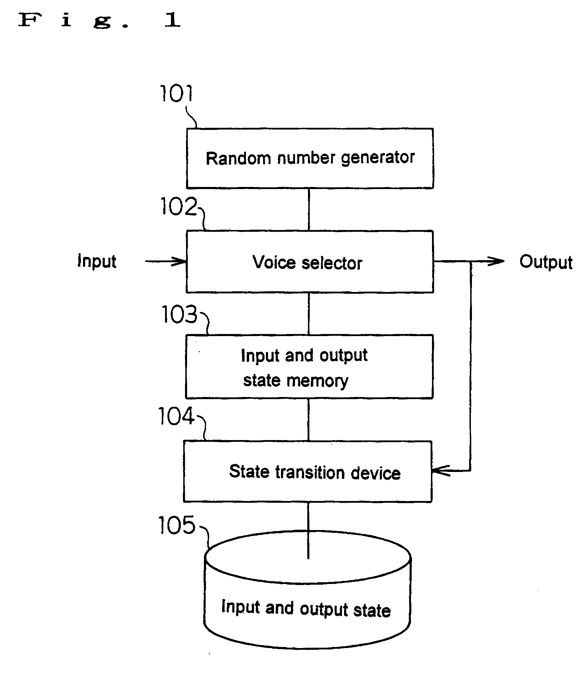

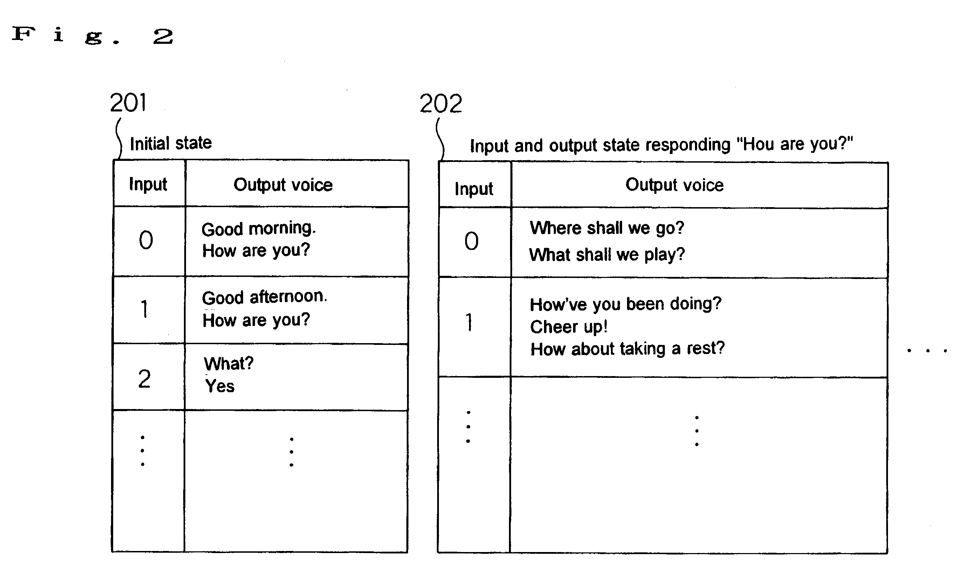

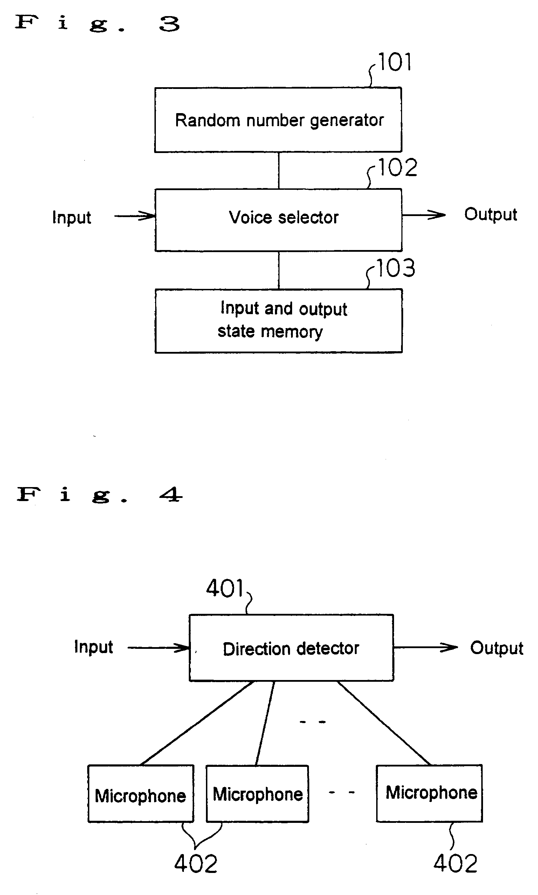

A voice selector 102 comprises an input and output state 105 composed of input x (non-negative integer) in state s and n (s) pieces of output voices sp (x, i) ($0 \leq i < n$ (s)), a random number generator 101, and an input and output state memory 103 (see Fig. 1). First, suppose that an initial state 201 in Fig. 2 is stored in the input and output state memory 103. Herein, in the case of input x, the corresponding set sp (x, i) of the output voice is selected, and i is determined therefrom by a random number generator 101r (n (s)) (where $0 \leq r$ (n (s)) < n (s)), and voice is outputted. At this time, a state transition device 104 observes the output and changes the input and output state memory. For example, when "How are you?" is outputted in the initial state 201, it is changed to the state 202 corresponding to this output by referring to the input and output state 105. In this way, it is also possible to build up a simple dialog system. Or, by a simple structure as shown in Fig. 3, only one response may be made.

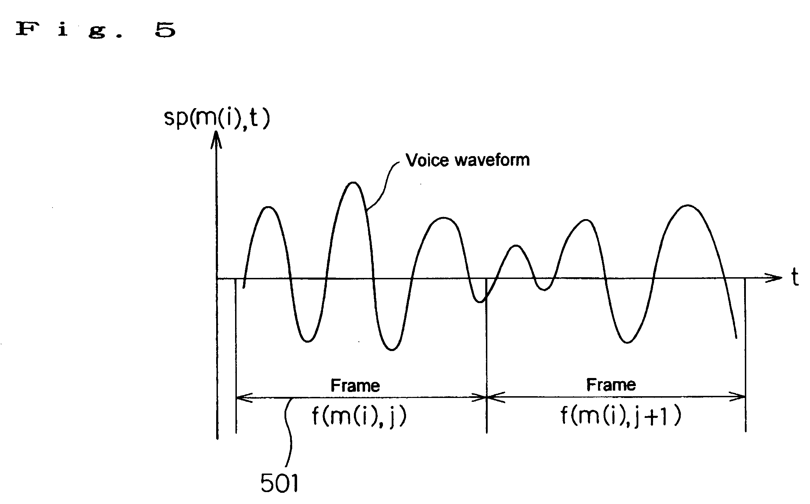

A direction detector 401 has plural microphones 402 as shown in Fig. 4. For example, in the case of four microphones, voice s (m(i), t) entered from microphone m (i) ($0 \leq i < 4$) is divided into frames f (m(i), j) 501 ($0 \leq j$, for example, 16 ms interval) (see Fig. 5). In the divided frame, voice energy e (m (n), j) is determined. This energy e (m (n), j) is sequentially stored in a cyclic memory of length l (for example, length 100). Every time the energy of each frame is determined, the sum of energy in the past one frame is determined in each microphone, and the one of the maximum energy sum is determined. When the maximum value is larger than the threshold "The" preliminarily determined experimentally, the direction of the microphone measuring the maximum value is regarded as the voice pronounced direction, and its microphone number i is outputted.

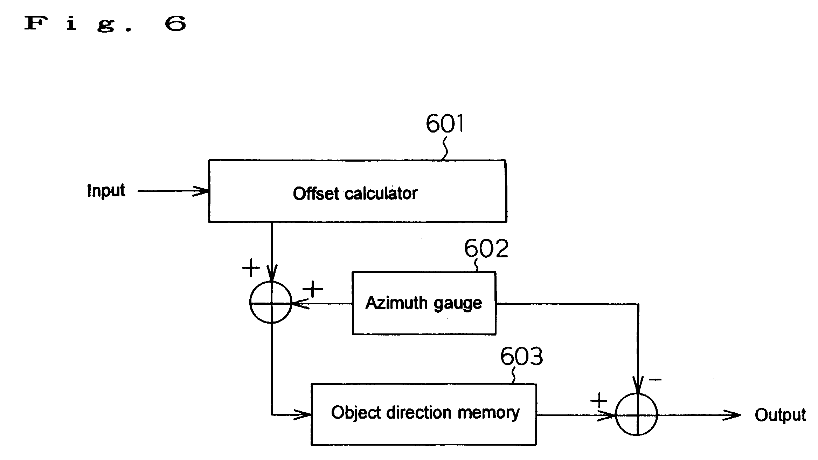

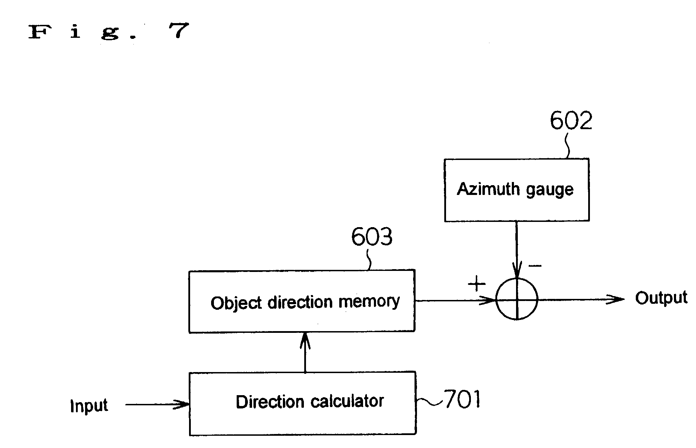

As shown in Fig. 6, for input x (x being a non-negative integer), the offset from the present direction is determined by an offset calculator 601, and the offset is added to the direction measured by an azimuth gauge 602, and thereby the next moving direction is stored in an object direction memory 603. The offset calculator 601 holds an offset table for input x, and outputs a corresponding offset in the case of input x. Or, as shown in Fig. 7, for input x (x being a non-negative integer), an absolute direction is determined by a direction calculator 701, and the absolute direction is stored in the object direction memory 603. This direction calculator 701 can be also realized by holding the direction value of input x as table, same as the offset calculator 601. After thus determining the object direction, as the entire device moves, the direction is sequentially measured in the azimuth gauge, and the difference between the measured direction and the direction stored in the direction object memory 603 is outputted, and by feedback control, the entire device can be moved in the object direction.

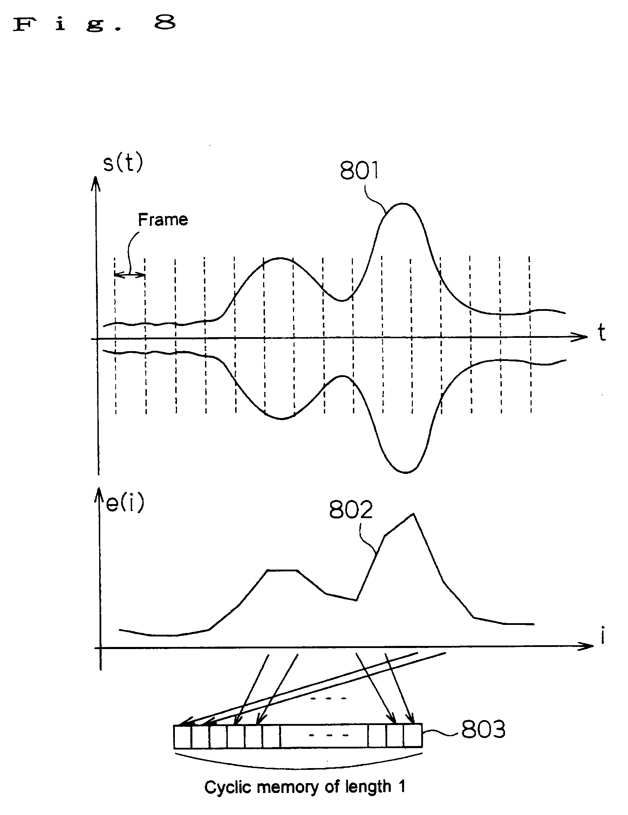

Devices relating to voice recognition are described below. That is, the voice end point detection device, voice detection device, and feature amount extraction device are described. First, input voice s (t) from microphone is divided into frames f (i) (i being a non-negative integer, the frame interval, for example, 16 ms), and the energy in the frame is supposed to be e (i) 802 (see Fig. 8). Herein, every time the voice of frame unit is entered, the variance of energy of the past frames in a specific period is determined, and when the variance crosses the experimental threshold Thv determined preliminarily from the larger side to the smaller side, it is determined the end point of voice. Methods of determining the variance of energy from every frame in specific period are described below. First, in a method of using cyclic memory, the energy determined in every frame is stored sequentially in the cyclic memory 803 of length l. Every time the energy of frame is determined, the past energy for a specific period is referred to from the cyclic memory, and the variance is determined. In other method, cyclic memory is not used. Holding the mean m (i-1) and variance v (i-1) of the past energy, the weighted sum of the mean of the newly determined energy e (i) and past energy is obtained as new mean m (i) of energy, and the weighted sum of the past variance v (i-1) and |e(i) - m(i)| is obtained as new variance v (i), so that a spurious energy variance is determined. Herein, attenuation factor $\alpha$ is used for weighting, and the variance is determined by the formula shown below. The value of $\alpha$ is 1.02.

$$m(i) = \frac{m(i-1)}{\alpha} + \frac{\alpha-1}{\alpha} \, e(i) \qquad \text{[Formula 1]}$$

$$v(i) = \frac{v(i-1)}{\alpha} + \frac{\alpha-1}{\alpha} \, |e(i) - m(i)|$$

In this way, cyclic memory is not required, and the memory can be saved, and it also saves the labor of determining the sum of energy in a specific period every time new energy is determined, so that the processing time can be shortened.

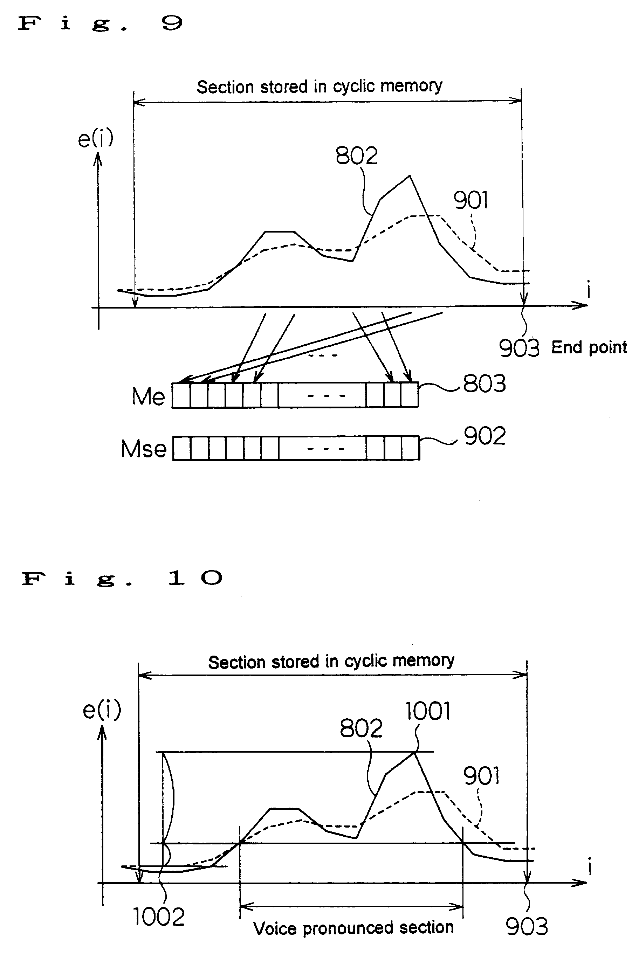

Fig. 10 is an explanatory diagram of voice detecting method, and Fig. 11 is a structural diagram of voice recognition device.

Preparing a cyclic memory Me 803 for energy and a cyclic memory Mse 902 for smoothing energy, every time frame energy is determined, the energy 802 is stored in the memory Me and the smoothing energy 901 in the memory Mse. When the end point 902 is determined, the history of energy is left over in these cyclic memories, and when the length of the cyclic memories is enough (for example, a length corresponding to 2 seconds), the energy for one word is left over. Herein, from this memory, the voice pronounced section is extracted. As the method of extracting the section, determining a certain threshold Th, when the energy in the cyclic memory Me is observed, the point surpassing the threshold for the first time from the past is determined as the start point of voice, and the point crossing the threshold when returning to the past from the termination of voice is the end point of voice, and the section between the start point and end point is the voice pronounced section. Herein, to determine the threshold Th, the maximum value max 1001 in the memory Me and the minimum value min 1002 of smoothing energy in the memory Mse are determined when the voice end point is detected, and the value shown in the following formula is determined as Th.

$$Th = min + \beta(max - min) \qquad \text{[Formula 2]}$$

The value of $\beta$ was about 0.07. As the method of smoothing, the median value in a specific window was used, but not limited to this, for example, the mean may be used. Thus, the energy is used as the maximum value when determining the threshold because, in the case of smoothing energy instead, the maximum value fluctuates largely when the length of word varies, and hence the threshold changes, so that satisfactory voice detection is not expected.

Next is extracted the feature amount for recognition from the detected voice. The feature amount, same as the energy, is determined in every frame, and is stored in the cyclic memory. This feature amount is a feature amount vector composed of three elements, that is, zero crossing number of original signal, zero crossing number of differential signal of original signal, and difference between frames of the object of logarithm of energy of original signal.

Fig. 11 is a structural diagram of voice recognition device.

The feature amount vector of voice thus obtained through voice end point detector 1101, voice detector 1102, and feature amount extractor 1103, and a dictionary 1105 of the feature amount vector of voice registered preliminarily are compared in a distance calculator 1104, and the best score is outputted as result of recognition. As the method of comparison, the Euclidean distance between vectors may be simply obtained, or DP matching method may be employed.

The operation device used herein is described below. The operation device is composed of, for example, three motors with propeller, and a driving device of the motors, and when a next moving direction is entered, the three motors are controlled so that the entire application device may move in the direction.

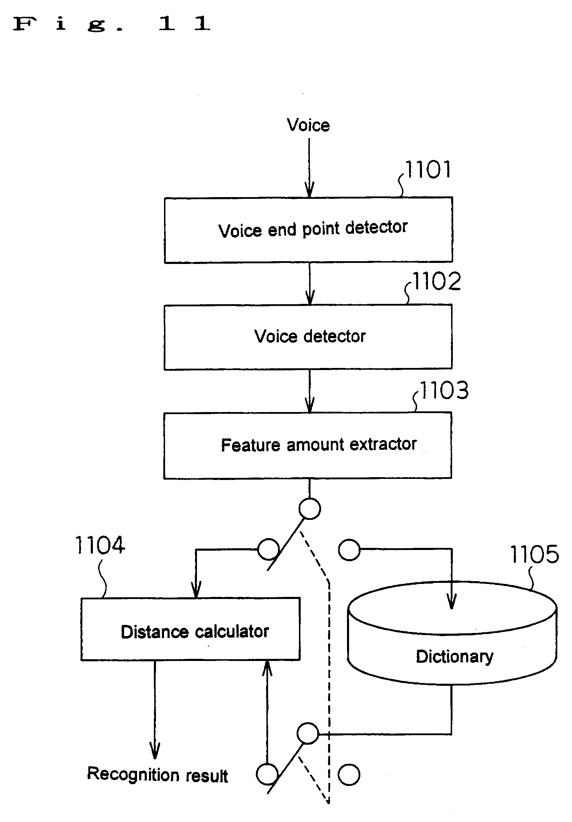

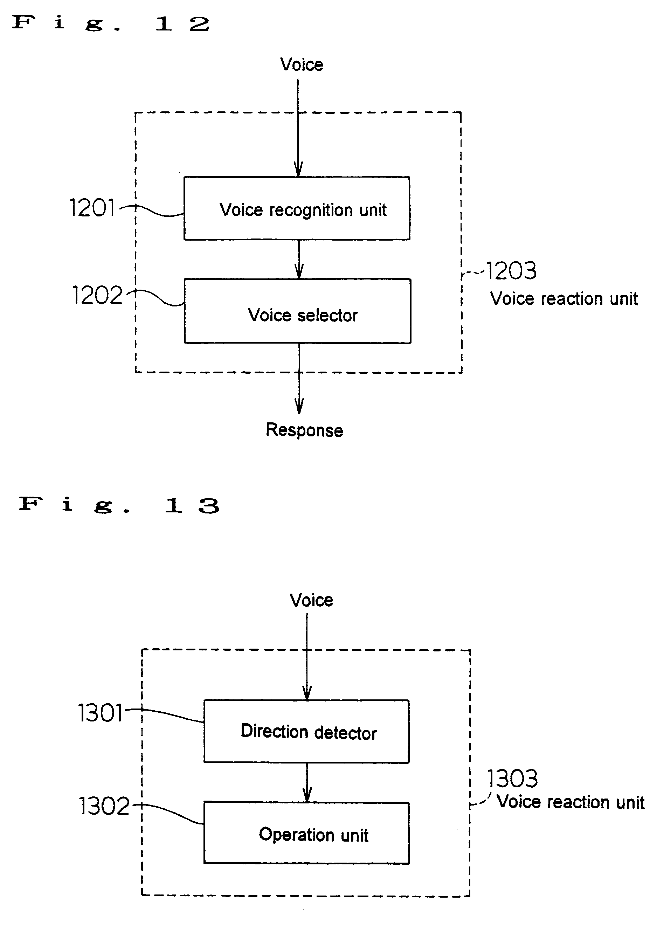

Fig. 12 is a structural diagram of a voice reaction device comprising a voice recognition device and a voice selection device.

An application device using these devices is described below. A voice reaction device 1203 comprising such voice recognition device 1201 and voice selector 1202 is described (Fig. 12). In the voice recognition device 1201, plural voices can be registered, and the registered voice closest to the input voice is outputted. As this output, for example, a registration number for each registered voice is set. On the other hand, in the voice selector 1202, plural voices are registered for the registration number, and when a certain registration number is entered, one is selected randomly from the plural voices and is outputted. On the whole, when a certain voice is entered, the corresponding voice is outputted, and moreover, for the same input, the device makes various responses. For example, for "Good morning," response voices "Good morning" and "How are you?" are prepared, and when "Good morning" is recognized, these response voices may be uttered randomly.

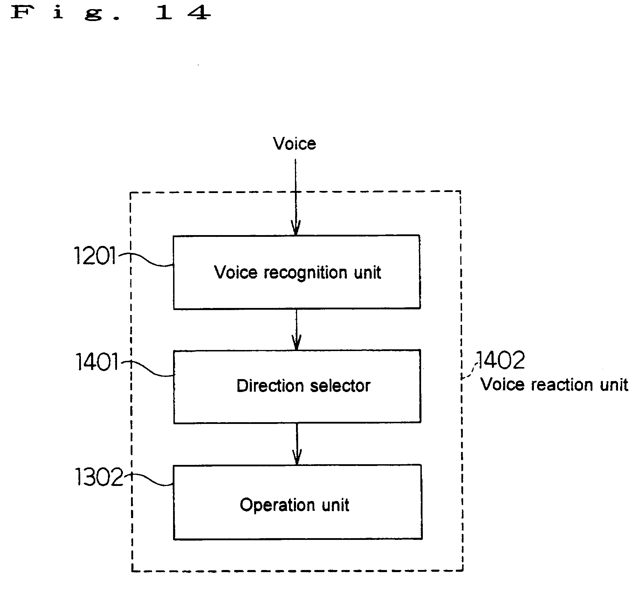

Fig. 13 is a structural diagram of a voice response device employing a direction detection device and an operation device.

A second example is a voice reaction device 1303 comprising a direction detector 1301 and an operation device 1302, in which the direction obtained by the direction detector 1301 is put into the operation device 1302 as shown above, and the entire device is moved in the direction.

Fig. 14 is a structural diagram of voice reaction device comprising a voice recognition device, a direction selection device, and an operation device.

A third example is a voice reaction device 1402 comprising the voice recognition device 1201, a direction selector 1401, and the operation device 1302, in which the result of the voice recognition device 1201 is put into the direction selector 1401, and its output is put into the operation device 1302, so that the entire device is moved to the object direction while comparing the present direction of the entire device and the object direction. For example, supposing the north to be 0 degree and turning to the east to be the positive direction, when the entire device is directed to the direction of 0 degree and when "right" is recognized by the voice recognition device, by assigning the word "right" with +90 degrees, the final direction of the entire device is 0 + 90 = 90 degrees, so that the operation device works to move in this object direction. At this time, as the entire device moves, the present direction and its object direction are compared, and the operation device controls the motors so as to move in the object direction. Herein, instead of the words showing relative directions such as right and left, when words expressing absolute directions such as north and southeast are used, the value is 0 degree when the object direction is north, and -135 degrees when southeast.
Herein, the object direction ranges from -180 to +180.

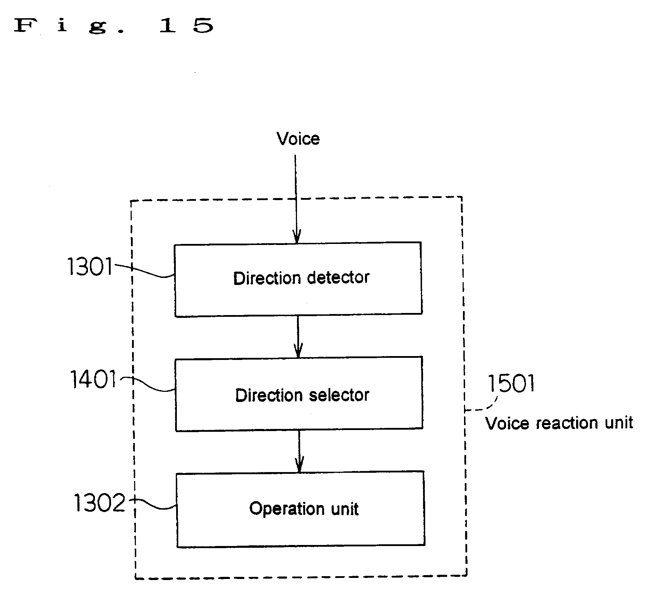

Fig. 15 is a structural diagram of a voice reaction device employing a direction detection device, a direction selection device, and an operation device.

A fourth example relates to a voice reaction device 1501 comprising the direction detector 1301, direction selector 1401 and operation device 1302, in which, same as in the third example of voice reaction device 1402, the result of the direction detector 1301 is put into the direction selector 1401, and its output is put into the operation device 1302, so that the entire device is moved in the object direction while comparing the present direction of the entire device and the object direction.

Fig. 16 is a structural diagram of a voice reaction device using a voice recognition device and an operation device.

A fifth example relates to a voice reaction device 1601 comprising the voice recognition device 1201 and operation device 1302, in which, same as in the voice reaction device 1402, the result of the voice recognition device 1201 is put into the operation device 1302, and the entire device is moved in the object direction.

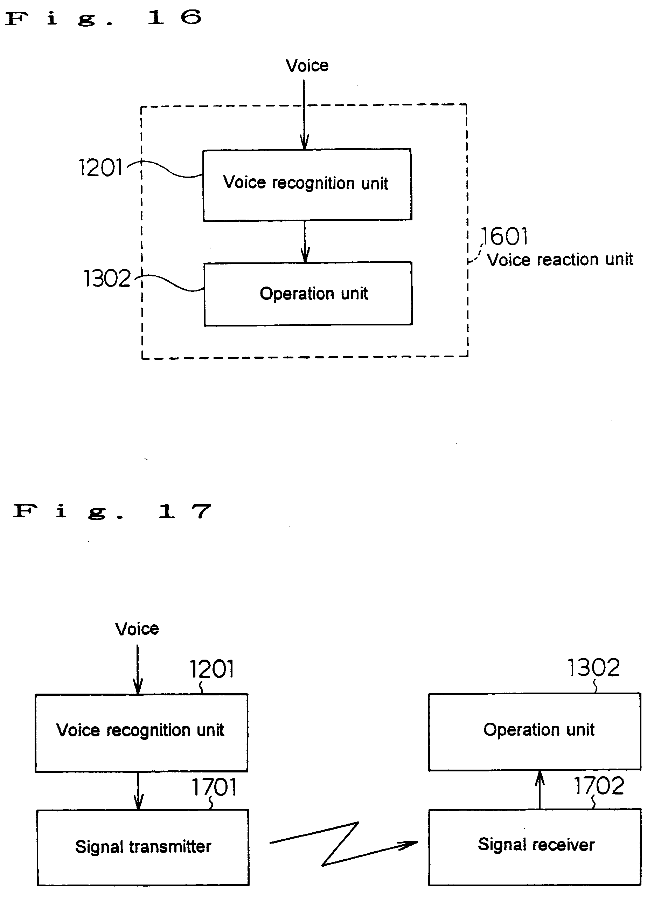

Fig. 17 is a structural diagram of a voice reaction device that can be operated by remote control.

Moreover, of these five voice reaction devices, those containing the voice recognition device 1201 add a signal transmitter 1701 to the voice recognition device side, and add a signal receiver 1702 to the voice selector 1202, direction selector 1401 or operation device 1302 provided in the rear stage of the voice recognition device in each constitution, so that only the voice recognition device may be manipulated at a distance as a local remote control. Herein, infrared ray or wireless means may be used in signal transmission and reception.

By attaching such voice reaction device to a balloon, it is possible to talk with the balloon or control the balloon, and a toy making use of the characteristic warmth of balloon can be produced.

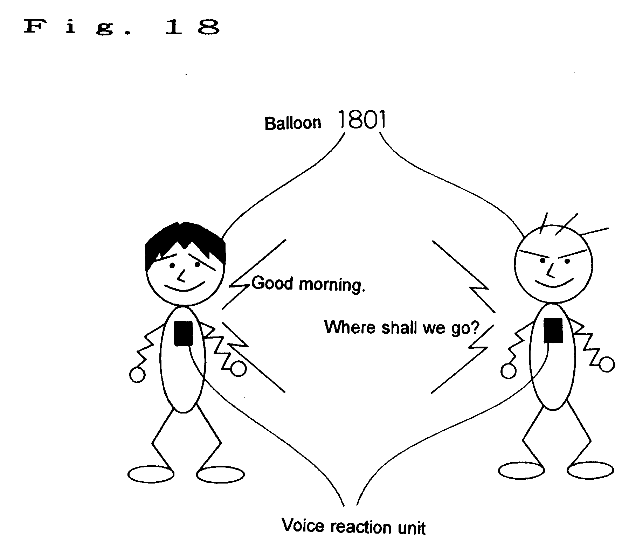

Fig. 18 is an explanatory diagram of a toy using a voice reaction device.

When two balloons each having one voice reaction devices 1203 comprising such voice recognition device and voice selection device are prepared and the two voice reaction devices are made to talk to each other instead of a player talking to the voice reaction device, it is possible to create a free talking toy. Moreover, plural balloons having the voice reaction devices may be prepared to allow to each to each other. At this time, in each balloon with voice reaction device, when a reject function is provided in the voice recognition process, it is possible to react to a specific word only, and it may be constituted to allow only one balloon to react to a specific utterance. For example, each balloon may be named, and it is possible to make the named balloon react only when the name is called. In the method of rejection, when recognizing the voice, the distance from the internal dictionary is calculated, and the threshold is determined experimentally, and it is designed to reject when exceeding the threshold.

The toy is not limited to balloons only, but may be applied, for example, to dolls and pictures. It may be also applied to a moving picture in display.

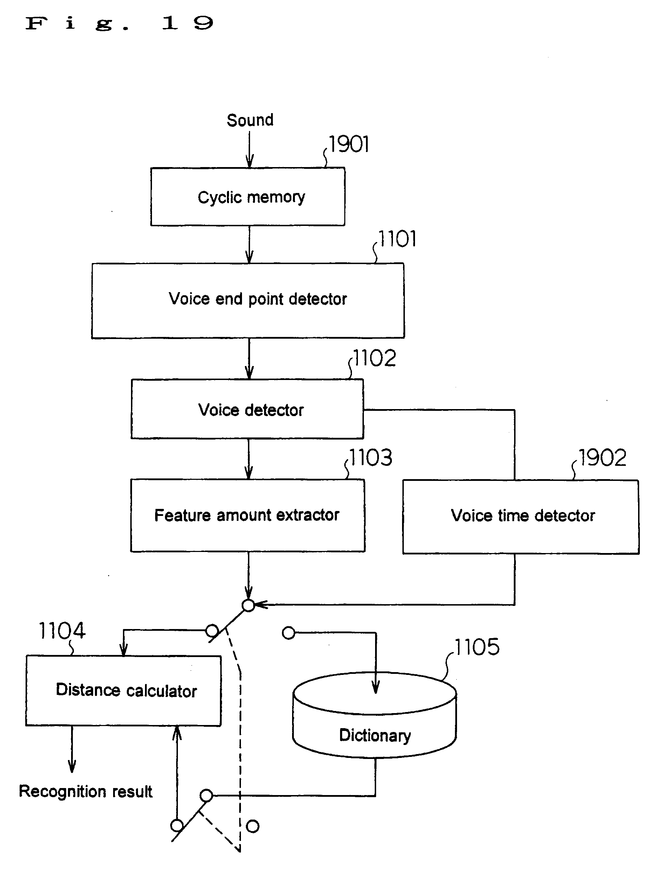

Fig. 19 is a structural diagram of an embodiment of a voice recognition device according to claim 25 of the invention. This embodiment is realized by adding a cyclic memory 1901 and a voice time detector 1902 to the voice recognition device in Fig. 11. That is, the cyclic memory 1901 is for storing the sound including the input uttered voice cyclically for a specific time. The voice time detector 1902 is to detect the time of the voice detected by the voice detector 1102. In the dictionary 1105, in addition to the feature amount of the voice, the time of the voice pronounced section is also registered.

The operation of the embodiment is described below.

The cyclic memory 1901 stores the input sound cyclically for a specific time. The voice end point detector 1101 detects the end point of the voice from the sound stored in the cyclic memory 1901. The voice detector 1102, when the voice end point detector 1101 detects the end point of voice, extracts the voice pronounced section from the cyclic memory 1901. The voice time detector 1902 detects the voice time corresponding to the length of the voice pronounced section. The feature amount extractor 1103 detects the feature amount for recognition from the detected voice. On the basis of thus obtained voice feature amount and voice time, the best score is outputted as the result of recognition by referring to the dictionary 1105 and distance calculator 1104.

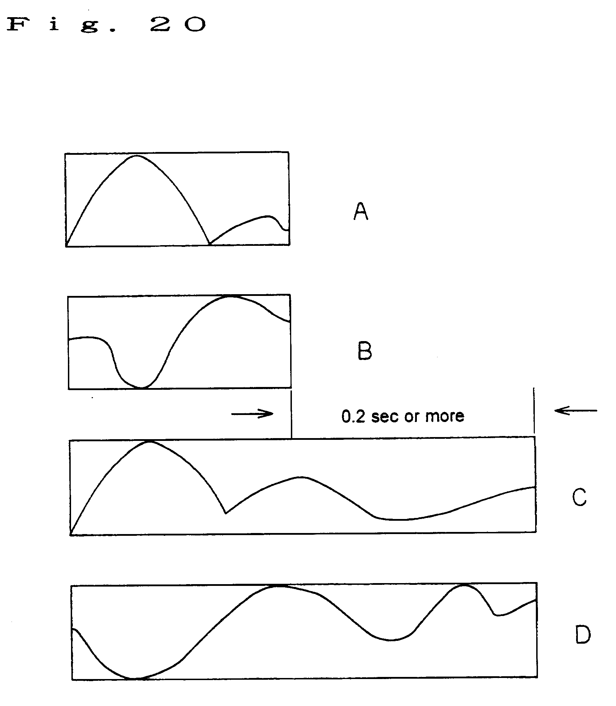

In this embodiment, on the basis of thus obtained voice feature amount and voice time, the best score is outputted as the result of recognition by referring to the dictionary 1105 and distance calculator 1104, but not limited to this, for example, words registered in the dictionary 1104 may be divided into groups by voice time, and, when recognizing, first the group is specified on the basis of the voice time of the voice to be recognized, and the best score in the group for the feature amount is outputted as the result of recognition. Fig. 20 is a diagram showing grouping of words registered in the dictionary 1105 according to the voice time. That is, A and B belong to a same voice group. C and D belong to a same voice group, which is different to the group of A and B.

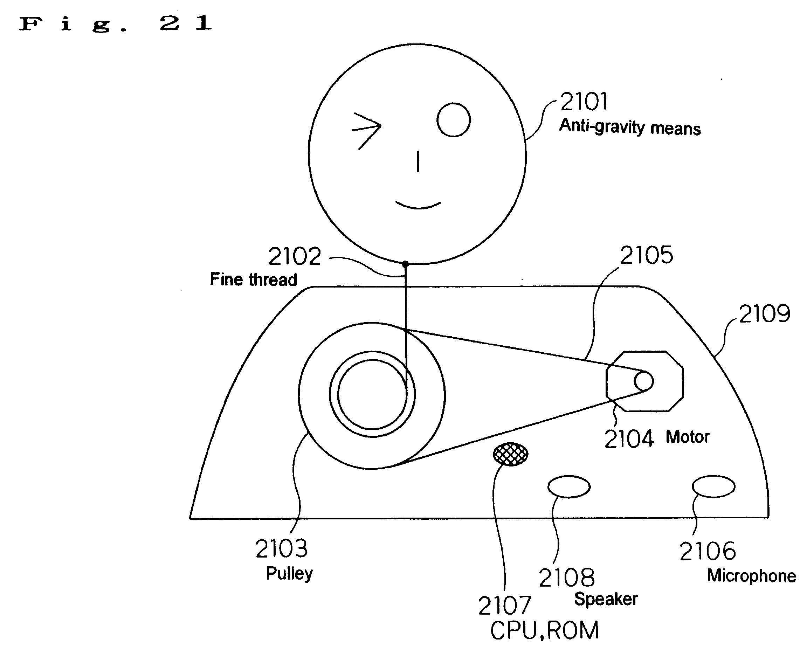

Referring now to Fig. 21, an embodiment of reaction device in other aspect of the invention is described below.

In the diagram, the reaction device comprises anti-gravity means 2101 of spherical form inflated with helium gas or the like, pulley 2103 as part of thread driving means for pulling out or rolling a thin thread 2102, a motor 2104 for rotating and driving the pulley 2103, and a belt 2105 for transmitting the torque of the motor 2104 to the pulley 2103. This thin thread 2102 and part of the anti-gravity means 2101 are connected, and mechanical reactions of the anti-gravity means 2101 such as deformation, move and operation are effected by the pulley 2103 and motor 2104.

This reaction device also possesses a microphone 2106 for detecting the human voice, a control circuit 2107 composed of CPU and ROM for recognizing the input voice from the microphone 2106 for issuing specified output signal to each part, and a speaker 2108 for delivering the sound as a reaction action. On the surface of the anti-gravity means 2101, a human face of a cheerful expression is drawn.

A body 2109 for accommodating the parts such as the pulley 2103, motor 2104, microphone 2106 and control circuit 2107 has a flat bottom so that it can be installed on the floor. A hole is provided in an upper part of the body 2109, and the thread 2102 moves up and down through this hole.

In thus constituted embodiment, the operation is described below.

Depending on the input human voice from the microphone 2106, an output voice is delivered from the speaker 2108 by the function of the control circuit 2107. While generating the output voice, the motor 2104 rotates.

For example, by rotating the motor 2104 alternately clockwise and counterclockwise, a nodding action may be done by the anti-gravity means 2101.

At this time, when the thread 2102 is released fully by rotating the motor 2104, the anti-gravity means 2101 goes up slowly and buoyantly, and at the time of nearly about the upper limit, the motor 2104 is rotated reversely to take up the thread 2102, so that the anti-gravity means 2101 descends suddenly, and a very interesting motion can be made.

In particular, such action of the anti-gravity means 2101 may exhibit an unexpected motion due to effects of external conditions, such as the wind, and very human and warm motions may be made. Such effect is not obtained in the fixed mechanical action.

The thread used in the invention is not a thread in its narrow sense of meaning, but includes a cord, soft metal wire and others in a wide sense of meaning.

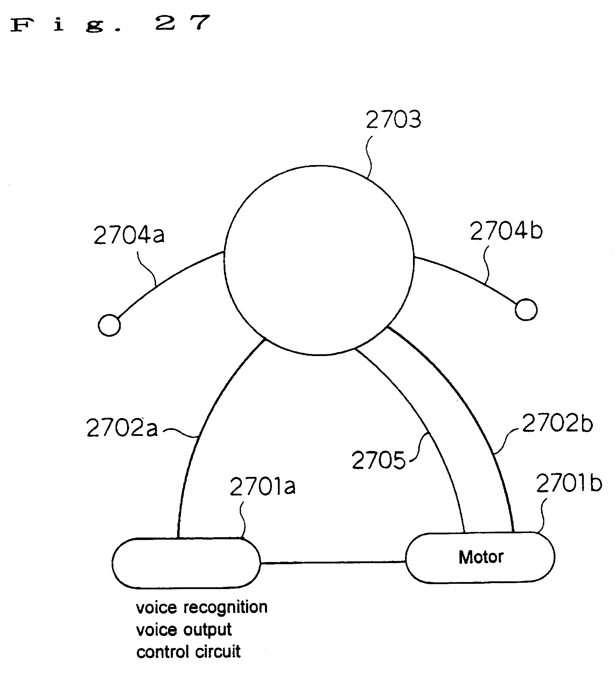

In the above embodiment, the reaction device as shown in Fig. 21 is used, but not limited to this, for example, the constitution as shown in Fig. 27 may be used.

That is, a pair of shoe-shaped stationary parts 2701a, 2701b are provided, and bellows-shaped parts 2702a, 2072b corresponding to the legs made of flexible paper are extended upward therefrom. Above the legs 2702a, 2702b, spherical anti-gravity means 2703 is provided as the portion corresponding to the upper half of the body. The anti-gravity means is inflated with helium gas or the like, and a thin thread 2705 is linked to the lower part. From both sides of the anti-gravity means 2703, as the portion corresponding to the arms, 2704a, 2704b are extended downward obliquely to right and left. In the stationary part 2701a, microphone, speaker, control circuit and others are accommodated. In the stationary parts 2701b, motor, pulley and others are accommodated. One end of the thread 2705 is connected to this pulley. By the rotary action of the motor, the anti-gravity means 2703 make nodding and other motions, which is essentially same as in the above embodiment. The drawing shows the extended state of the legs.

Referring now to a table, an embodiment of reaction selection device in a different aspect of the invention is described below.

The reaction selection device possesses a set of inputs, and plural input and output states composed of plural voice response and plural mechanical reactions corresponding to individual inputs, in which a voice response and mechanical reaction are selected and outputted for one input, and the state is changed to one of the plural input and output states, and the next input and output are determined according to the past history of inputs and outputs.

The basic operation is same as explained in the embodiment in Fig. 1 to Fig. 3.

Main different points from the above action are described by referring to the table below.

⟨Initial state⟩

| Input | Output voice | Mechanical reaction |
|---|---|---|
| 0: Good morning | Good morning | Mode 0 |
| | Fine | Mode 1 |
| 1: How are you? | Good afternoon | Mode 0 |
| | Fine | Mode 1 |
| 2: Smiley? | What? | Mode 2 |

Herein, mode 0 shows a slow action as the action of Good morning and How are you?, and mode 1 shows a quick action as the action of How are you?. Mode 2 shows a further quick action.

For example, the reaction device shown in Fig. 21 is explained. This reaction device is named Smiley.

That is, in the initial state, man greets Smiley by saying "How are you?", and Smiley puts the voice into the control circuit, and utters an output sound of "Fine." The action at this time is specified in mode 1, and it shows a quick action.

The action after Smiley replies "Fine" conforms to the relation of the input, output voice, and mechanical reaction shown in the table below.

⟨Input and output state responding to "Fine"⟩

| Input | Output voice | Mechanical reaction |
|---|---|---|
| 0 | Where shall we play? | Mode 1 |
| | What shall we play? | Mode 1 |
| 1 | How've you been doing? | Mode 2 |
| | Cheer up | Mode 1 |
| | How about taking a rest? | Mode 3 |

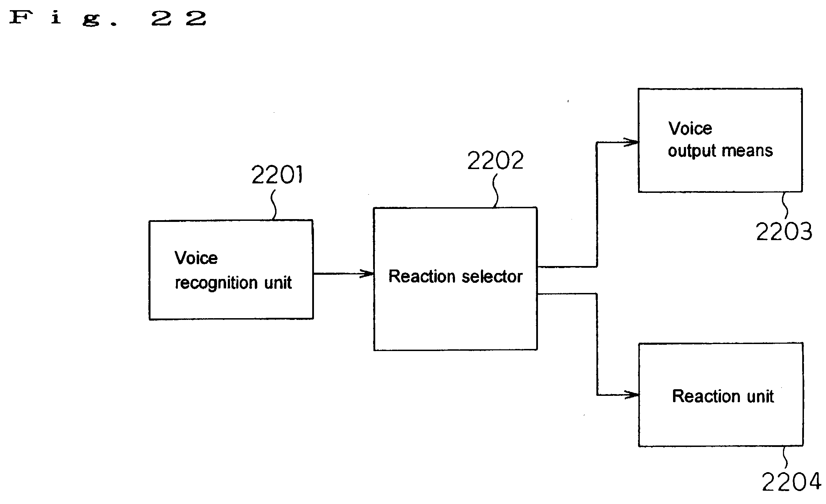

Referring now to Fig. 22, an embodiment of a response toy in other aspect of the invention is described.

As shown in the diagram, the reaction toy of the embodiment comprises the anti-gravity means (not shown) inflated with helium gas mainly, a voice recognition device 2201, a reaction selector 2202 for receiving the result of recognition, and determining the voice response and mechanical reaction, voice output means 2203 for uttering the voice response result, and a reaction device 2204 for driving the anti-gravity means depending on the mechanical reaction result.

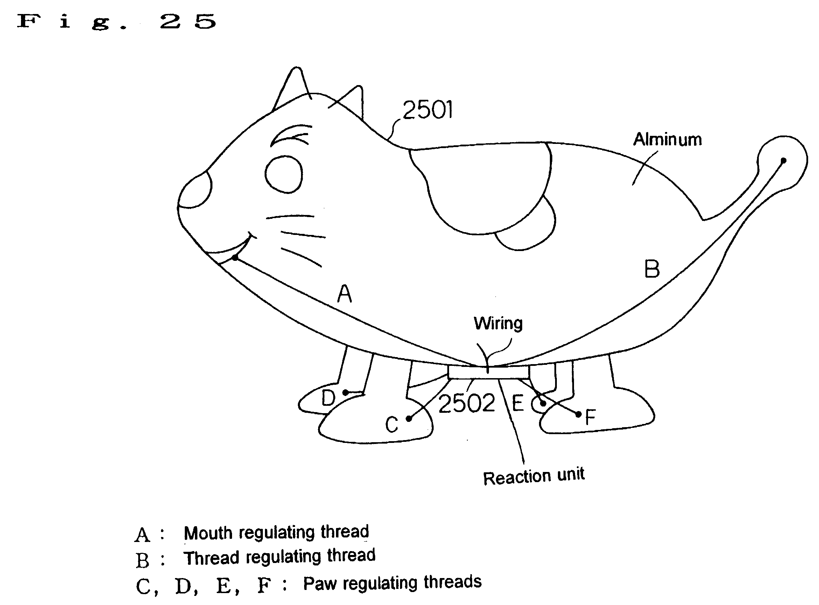

A specific application example of the embodiment is shown in Fig. 25.

That is, the main body 2501 is anti-gravity means shaped like a cat, and inflated with helium gas. A control and driving device 2502 of the response toy shown in Fig. 22 is provided in the belly of the main body 2501.

As shown n Fig. 25, the control and driving device 2502 has a thread A for opening and closing the mouth provided in the mouth area of the main body 2501, a thread B for moving the tail in the tail area, and threads C, D, E, F for moving the paws in the paw areas.

In this constitution, when man speaks to the main body 2501, the voice is recognized by the voice recognition device 2201, and the output voice, for example, "Good morning" is selected by the reaction selector 2202, and this sound is issued from the voice output means 2203. Together with the voice output, parts of the cat main body are moved depending on the mechanical reaction mode.

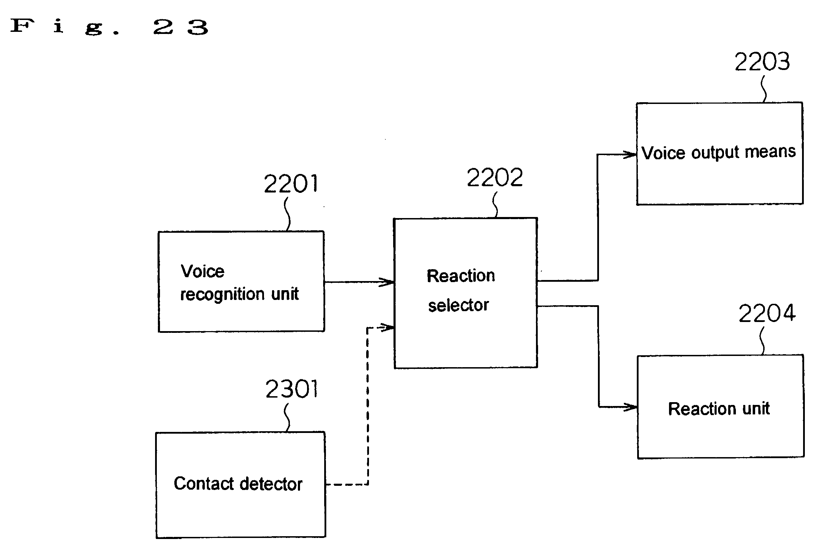

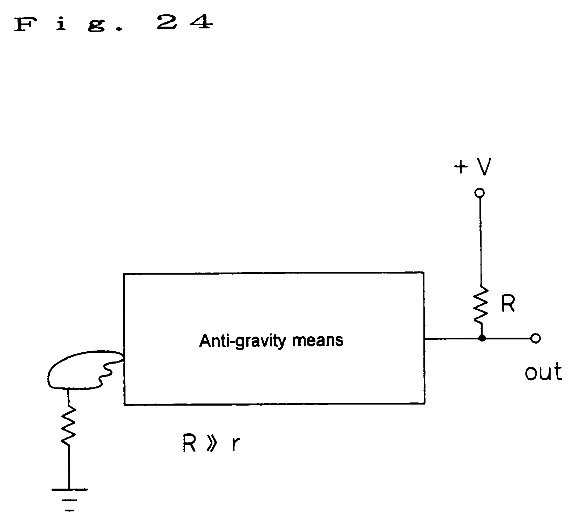

Fig. 25 is a drawing showing an embodiment of the response toy conforming to claim 30 of the invention. Fig. 23 is a structural diagram relating to the device of the response toy. That is, the cat main body 2501 shown in Fig. 23 is anti-gravity means inflated with helium gas. The device of the response toy in Fig. 23 is stored in the portion of 2502 in Fig. 25. The device 2502 about response toy is a structure of adding a contact detector 2301 to the devices in Fig. 22. The contact detector 2301 is an aluminum-coated or resin-coated touch sensor provided in whole or part of the main body 2501. As shown in Fig. 24, when man touches the cat covered with the touch sensor which is the anti-gravity means, its contact is detected.

When man speaks to and/or touches the response toy, examples of response of the response toy are shown below.

| Voice input response | Contact input | Output voice | Mechanical |
|---|---|---|---|
| 0 | | Good morning | Mode 0 |
| | | How are you? | Mode 1 |
| 1 | | Good afternoon | Mode 0 |
| | | How are you? | Mode 1 |
| 2 | | What? | Mode 2 |
| | 0 | Meow | Mode 3 |
| | 1 | Wooh | Mode 1 |

When man speaks to the response toy, it corresponds to a row of voice input. For example, when 0 of voice input is "Good morning", the voice is recognized by the voice recognition device 2201, and the sound "Good morning" is selected by the reaction selector 2202, and is delivered from the sound output means 2203. Together with this output, corresponding to the voice input of "Good morning", the mode of mechanical reaction corresponding to the reaction device is selected by the selector 2202. The mode of mechanical reaction is the rapidity and/or magnitude of moving the specified positions of the cat. The specified positions are A, B,C, D, E and F in this embodiment as shown in Fig. 25. That is, when swinging the tail, the thread B is moved, and when opening or closing the mouth, the thread A is moved.

When man touches the response toy, it corresponds to a row of contact input. For example, when 0 of the contact input is near the throat of the cat, its position is detected by a contact detector 2301, and the voice "Meow" is selected by the reaction selector 2202, and it delivered from the voice output means 2203. Together with the output, corresponding to the contact input, the mode of the mechanical reaction corresponding to the reaction device is selected by the selector 2202. In this case, for example, the cat waves its tail.

The voice recognition device of the embodiment may be also realized by the voice recognition device in claim 25 or 26.

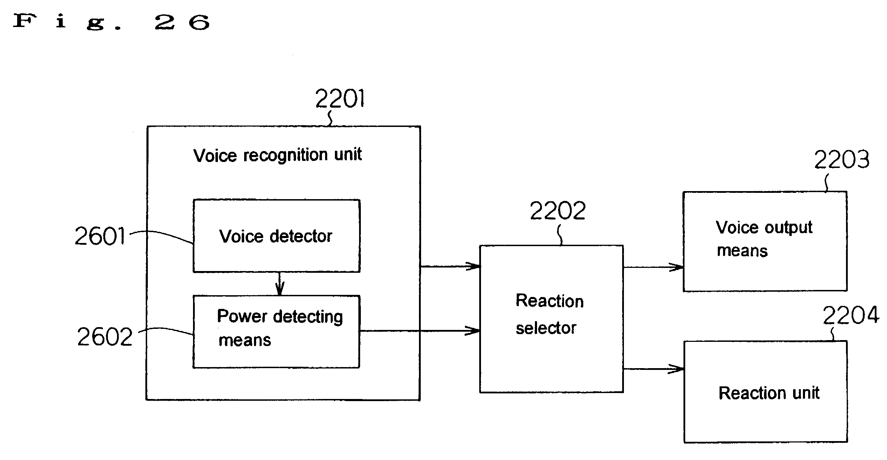

Also, as shown in Fig. 26, the voice recognition device 2201 may be provided with a voice detector 2601 and a power detector 2602, and the mode of mechanical reaction may be changed over depending on the voice power of the input voice. Thus, by ordering "Stop it!" loudly, waving of the tail may be stopped, and the thread B in Fig. 25 may be pulled so as to settle the tail in the hind paws, so that more animal-like expression may be realized.

By preparing plural input and output states of claim 1 and changing the input and output state depending on the past history of inputs and outputs, a simple dialog can be realized. Or by preparing plural outputs for one input, one input may be responded by various reactions, instead of always the same response.

By comprising plural microphones of claim 4, by detecting the microphone of the maximum energy, the voice pronounced direction can be detected.

By having the azimuth gauze of claim 5, the entire device can be correctly directed to the input direction.

The voice recognition device of claim 9 recognizes the voice by using the feature amount of claim 8, by first determining the approximate end point of voice by the voice end point detection device of claim 6, determining the threshold automatically by the voice detection device of claim 7, and extracting the voice section. Herein, the threshold is determined from the maximum value of the energy and the minimum value of the smoothing energy in the cyclic memories by the voice detection device, and this is intended to cope with length of the voice utterance section.

The voice reaction device of claim 10 enables to build up man-machine interface by combining with the voice recognition device and the voice selection device of claim 1, in which man speaks and the machine replies.

By combining the direction detection device and operation device as shown in claim 11, the entire device can be moved in response to the voice, so that the device reacting to the voice can be structured.

As in claim 12, by combining the voice recognition device, direction selection device and operation device, the entire device can be moved accurately in the direction indicated by the content of the voice.

As in claim 13, by combining the direction detection device, direction selection device and operation device, the entire device can be accurately moved in the direction of the voice.

As in claim 14, by combining the voice recognition device and operation device, the entire device can be moved in the direction indicated by the content of the voice.

The voice reaction device in claims 15, 16, 17 enables operation by remote control, by adding a signal transmitter to the voice recognition device and a signal receiver to the devices behind the voice recognition device in each device.

As in claims 18 and 19, by preparing two or more voice reaction devices of claim 10, and setting face to face, a toy talking automatically can be created.

As in claims 20, 21, 22, 23, 24, by attaching the voice reaction devices of claims 10, 11, 12, 13, 14 to balloons, a speaking toy having the characteristic warmth of balloon may be created. Besides, by incorporating a clock, and delivering a proper voice at a preset time, a device speaking from a machine, not from man, can be created.

In claims 25 and 26, since the length of time of word is taken into consideration, the voice recognition is much easier.

In claims 27 to 33, using, for example, threads, more natural motions can be realized.

## Claims

1. A voice selection device comprising plural input and output states composed of a set of inputs and plural voices corresponding to individual inputs, selecting and outputting a voice corresponding to one input, and then transferring to one state out of the plural input and output states, and determining next input and output according to a past history of inputs and outputs.

2. A voice selection device of claim 1, wherein there is only one input and output state, and one is selected and outputted out of the plural voices upon input.

3. A voice selection device of claim 1, wherein a random number is used in a method of selecting one voice from plural voices.

4. A direction detection device comprising plural microphones, wherein a direction of a microphone which is maximum in an energy of an inputted voice among the plural microphones is made as a detected direction.

5. A direction selection device comprising an azimuth gauge, characterized by outputting a difference between an object direction of a device which is changing its direction and a direction indicated by the azimuth gauge sequentially to guide the device correctly to the object direction.

6. A voice end point detection device for receiving voice, dividing the voice into frames, determining an energy row composed of energy in each frame, and determining an end point of the voice when a variance of the energy row becomes smaller than a threshold preset experimentally.

7. A voice detection device comprising a voice end point detection device which detects a voice end point and a cyclic memory for a specific time, wherein energy of every frame is sequentially stored in the cyclic memory, when the voice end point is detected by the voice end detection device, a maximum value in an energy row stored in the cyclic memory and a minimum value in a smoothed energy row which is obtained by smoothing the energy row are determined, a threshold is derived from the maximum value and the minimum value, and, referring to the energy row, a portion from a first part to a last part larger than the threshold is determined as a voice pronounced section.

8. A feature amount extraction device comprising a voice detection device, wherein in every frame of a detected voice , a zero crossing number of original signal, zero crossing number of differential signal of original signal, and the original signal energy are determined as feature amount vectors of the frame.

9. A voice recognition device comprising a voice end point detection device of claim 6, a voice detection device of claim 7, and a feature amount extraction device of claim 8, wherein a feature amount of a voice desired to be registered is preliminarily stored as a dictionary by using the feature amount extraction device, a feature amount of a voice desired to be recognized is determined by using the feature amount extraction device, a distance of the determined feature amount to the feature amount in the dictionary is determined, and a closet voice in the dictionary is obtained as a result of recognition.

10. A voice reaction device comprising a voice recognition device and a voice selection device of claim 1, wherein a response is made to an input voice.

11. A voice reaction device comprising a direction detection device of claim 4, and an operation device, wherein the operation device is driven according to the result of the direction detection device.

12. A voice reaction device comprising a voice recognition device, a direction selection device of claim 5, and an operation device, wherein an output of the voice recognition device is used as an input of the direction selection device, and the operation device is driven according to an output of the direction selection device.

13. A voice reaction device comprising a direction detection device of claim 4, a direction selection device of claim 5, and an operation device, wherein an output of the direction detection device is used as an input of the direction selection device, and the operation device is driven according to an output of the direction selection device.

14. A voice reaction device comprising a voice recognition device and an operation device, wherein the operation device is driven according to the output of the voice recognition device.

15. A voice reaction device of claim 10, wherein a signal transmission device is provided in the voice recognition device and a signal reception device is provided in the voice selection device, and remote operation is enabled.

16. A voice reaction device of claim 12, wherein a signal transmission device is provided in the voice recognition device, and a signal reception device is provided in the direction selection device, and remote operation is enabled.

17. A voice reaction device of claim 14, wherein a signal transmission device in the voice recognition device, and a signal reception device is provided in the operation device, and remote operation is enabled.

18. A toy comprising two voice reaction devices of claim 10, wherein the two voice reaction devices talk with each other.

19. A toy comprising a plurality of voice reaction devices of claim 10, wherein a part of voice reaction devices of other voice reaction devices reacts to a voice uttered by one voice reaction device, and thus the plurality of voice reaction devices talk with each other.

20. A toy comprising a voice reaction device of claim 10 and a balloon, wherein a response is made to an input voice.

21. A toy comprising a voice reaction device of claim 11 and a balloon, wherein it moves in a voice pronounced direction.

22. A toy comprising a voice reaction device of claim 12 and a balloon, wherein it moves in a direction instructed by an input voice.

23. A toy comprising a voice reaction device of claim 13 and a balloon, wherein it moves in a voice pronounced direction.

24. A toy comprising a voice reaction device of claim 14 and a balloon, wherein it moves in a direction instructed by an input voice.

25. A voice recognition device comprising a cyclic memory for cyclically for a specific time storing sound including pronounced voice, a voice end point detecting device for detecting an end point of the sound, a voice detection device for cutting out a voice pronounced portion up to said end point from the cyclic memory, a feature amount extraction device for extracting feature amount such as zero crossing number of voice, and a voice time detection device for measuring a voice pronounced time in the pronounced portion of the voice, wherein a feature amount and a voice pronounced time of a voice desired to be registered are preliminarily stored as a dictionary, the voice feature amount desired to be recognized is determined by using the feature amount extraction device, the voice pronounced time is determined by using the voice pronounced time detection device, the distance between the voice feature amount and the voice pronounced time in the dictionary are determined, and then the closest voice in the dictionary is obtained as a result of recognition.

26. A voice recognition device of claim 25, wherein plural words registered in the dictionary are classified into word groups differing in the specified time of voice pronounced time, when recognizing the voice, first the voice pronounced time is detected, and the word group corresponding to the detected time is selected, and further, among words in the same word group, a word differing in a feature amount extracted by the feature amount extraction device is selected.

27. A reaction device comprising anti-gravity means inflated with helium gas or the like, and thread driving means for leading out one or plural threads, wherein the thread and a part of the anti-gravity means are connected, and mechanical reactions of the anti-gravity means such as deformation, moving and motion are effected by the thread driving means.

28. A reaction selection device possessing (1) a set of inputs, (2) plural input and output states including plural voice responses corresponding to the individual inputs, and (3) plural mechanical reactions, wherein a voice response and a mechanical reaction are selected and outputted for one input, the state is changed to one of the plural input and output states, and next input and output are determined by a past history of inputs and outputs.

29. A response toy comprising anti-gravity means inflated with helium gas or the like, a voice recognition device, a reaction selection device of claim 28 for receiving its result of recognition and determining a voice response and a mechanical reaction, voice output means for uttering the determined voice response , and a reaction device of claim 27 for driving the anti-gravity means according to the determined mechanical reaction .

30. A response toy comprising anti-gravity means inflated with helium gas or the like, a voice recognition device, a contact detection device having a touch sensor provided in whole or a part of a surface of the anti-gravity means for outputting contact detection of hand or the like, a reaction selection device of claim 28 for receiving the result of recognition and result of contact detection and determining voice response and mechanical reaction, voice output means for pronouncing the result of voice response, and a reaction device of claim 27 for driving anti-gravity means by the result of mechanical reaction.

31. A response toy of claim 29, wherein the voice recognition device is a voice recognition device of claim 25 or claim 26.

32. A response toy of claim 30, wherein the voice recognition device is a voice recognition device of claim 25 or claim 26.

33. A response toy of claim 31 or 32, wherein the voice recognition device comprises power detecting means for detecting a power of voice utterance, and the reaction device controls a magnitude of mechanical reaction in proportion to the voice utterance power.

F i g .   1

101

Random number generator

102

Input →

Voice selector

→ Output

103

Input and output
state memory

104

State transition device

105

Input and output state

# Fig. 2

**201**

Initial state

| Input | Output voice |
|-------|--------------|
| 0 | Good morning.<br>How are you? |
| 1 | Good afternoon.<br>How are you? |
| 2 | What?<br>Yes |
| ⋮ | ⋮ |

**202**

Input and output state responding "Hou are you?"

| Input | Output voice |
|-------|--------------|
| 0 | Where shall we go?<br>What shall we play? |
| 1 | How've you been doing?<br>Cheer up!<br>How about taking a rest? |
| ⋮ | ⋮ |

. . .

EP 0 735 521 A2

Fig. 3

```
                              ┌─101
        ┌──────────────────────────────────┐
        │     Random number generator      │
        └──────────────────────────────────┘
                         │
                              ┌─102
        ┌──────────────────────────────────┐
Input ─→│          Voice selector          │─→ Output
        └──────────────────────────────────┘
                         │
                              ┌─103
        ┌──────────────────────────────────┐
        │         Input and output         │
        │          state memory            │
        └──────────────────────────────────┘
```

Fig. 4

```
                   401┐
        ┌──────────────────────────────────┐
Input ──→│        Direction detector        │──→ Output
        └──────────────────────────────────┘
            ╱      │         ─ ─      ╲
        ┌────────┐ ┌────────┐     ┌────────┐
        │Microphone│ │Microphone│ ─ ─ │Microphone│
        └────────┘ └────────┘     └────────┘
             │                         │
            402                       402
```

EP 0 735 521 A2

Fig. 5

sp(m(i),t)

Voice waveform

t

| Frame | Frame |
|---|---|
| f(m(i),j) | f(m(i),j+1) |

501

Fig. 6

601
Input → Offset calculator

602
Azimuth gauge

603
Object direction memory → Output

EP 0 735 521 A2

Fig. 7

Azimuth gauge — 602

Object direction memory — 603

+ − Output

Direction calculator — 701

Input

F i g .  8

Cyclic memory of length 1

Fig. 9

Section stored in cyclic memory

e(i)

802

901

i

903 End point

Me 803

Mse 902

Fig. 10

Section stored in cyclic memory

e(i)

802 1001

901

i

1002

Voice pronounced section

903

# Fig. 11

Voice

↓

**Voice end point detector** — 1101

↓

**Voice detector** — 1102

↓

**Feature amount extractor** — 1103

1104

**Distance calculator**

↓

Recognition result

1105

**Dictionary**

Fig. 12

Voice

| 1201 | Voice recognition unit |

| 1202 | Voice selector |

--1203
Voice reaction unit

Response

Fig. 13

Voice

| 1301 | Direction detector |

| 1302 | Operation unit |

1303
Voice reaction unit

## F i g . 1 4

Voice

1201 — Voice recognition unit

1401 — Direction selector

1402
Voice reaction unit

1302 — Operation unit

F i g. 1 5

Voice

1301 — Direction detector

1401 — Direction selector

1302 — Operation unit

1501
Voice reaction unit

Fig. 16

Voice

1201 — Voice recognition unit

1601
Voice reaction unit

1302 — Operation unit

Fig. 17

Voice

1201

Voice recognition unit

1701

Signal transmitter

1302

Operation unit

1702

Signal receiver

Fig. 18

Balloon 1801

Good morning.

Where shall we go?

Voice reaction unit

Fig. 19

Sound

1901

Cyclic memory

1101

Voice end point detector

1102

Voice detector

1103

Feature amount extractor

1902

Voice time detector

1104

Distance calculator

Recognition result

1105

Dictionary

Fig. 20

A

B

0.2 sec or more

C

D

# Fig. 21

2101
Anti-gravity means

2102
Fine thread

2105

2109

2104  Motor

2103
Pulley

2108  Speaker

2107
CPU,ROM

2106
Microphone

Fig. 22

EP 0 735 521 A2

EP 0 735 521 A2

Fig. 23

2203

Voice output means

2201

Voice recognition unit

2202

Reaction selector

2301

Contact detector

2204

Reaction unit

Fig. 24

+ V

R

out

Anti-gravity means

R ≫ r

F i g. 2 5

A : Mouth regulating thread
B : Thread regulating thread
C, D, E, F : Paw regulating threads

EP 0 735 521 A2

Fig. 26

2201

Voice recognition unit

2601 — Voice detector

2602 — Power detecting means

2202

Reaction selector

2203

Voice output means

2204

Reaction unit

Fig. 27

voice recognition
voice output
control circuit